# EUROPEAN PATENT SPECIFICATION

(11) **EP 0 734 834 B1**
(45) Date of publication and mention of the grant of the patent: **19.09.2001**
(21) Application number: 96830153.1
(22) Date of filing: 26.03.1996
(51) Int. Cl.: B29C 45/44, B29C 45/33, B29C 45/26

(54) **A procedure for manufacturing closed impellers and an equipment therefor**
Verfahren zur Herstellung von geschlossenen Laufrädern und eine Vorrichtung dafür
Procédé de fabrication de roues à aubes fermées et un dispositif associé

(30) Priority: 31.03.1995 IT RE950017; 25.10.1995 IT RE950065
(43) Date of publication of application: 02.10.1996
(73) Proprietor: CATTINI S.R.L., 42018 San Martino in Rio, Reggio Emilia (IT)
(72) Inventor: Cattini, Paolo, 42100 Reggio Emilia (IT); Sanfelici, Federico, 42015 Correggio (Reggio Emilia) (IT)
(74) Representative: Lanzoni, Luciano

(56) References cited:
- EP-A- 0 205 105
- EP-A- 0 392 347
- DE-A- 1 806 757
- PATENT ABSTRACTS OF JAPAN vol. 95, no. 4, 31 May 1995 & JP-A-07 016884 (TOSHIBA CHEM CORP), 20 January 1995,
- KUNSTSTOFFE, vol. 74, no. 3, March 1984, MUNCHEN DE, pages 146-147, XP002006754 B.F. JOHANNSON: "Verringerte Werkzeugkosten beim Spritzgiessen durch Einsatz von Handhabungsgeräten"

## Description

The present invention relates to a procedure for manufacturing closed impellers and an equipment for carrying out the procedure.

In a specific, but not exclusive way, the present invention is applicable to the production of fluid dynamic pumps which foresee the use of plastic closed impellers (also called double flange impellers), however, the present invention can be used for manufacturing impellers using other types of material.

The prior art comprises a procedure of the type comprising the following phases: preparation of a moulding cavity defined by at least a plurality of cores; filling of the moulding cavity using materials in a cast condition and the subsequent solidification of the material, in order to manufacture a piece. The above mentioned cores are used to define the blades and the relative channels of the impeller. The prior art also comprises an equipment of a type comprising two opposed matrixes between which it is possible to insert a plurality of cores in order to define a moulding cavity of a closed impeller.

The known procedure of the above mentioned type envisages that, after the manufacturing of the piece, the cores are extracted following a trajectory of extraction lying on a normal plane of the axis of the impeller; said trajectory is generally curvilinear in such a way so as to follow the profile of the blades and so as to extract the cores without damaging the piece.

In carrying out the above mentioned procedure, an equipment is known, of the above type, for the injection moulding of plastic which comprises a plurality of arms placed like a dial each of which is joined to a respective core; the equipment known is also fitted with movement mechanisms which are activated by suitably provided motor means (for example hydraulic, pneumatic, electric means) which are used for transmitting to the arms the necessary movement on the outlet of the cores from the solidified piece.

However, the above mentioned procedures and the equipment known have several drawbacks.

Firstly, said procedures and equipment do not permit the manufacturing of a closed impeller having on the flanges at least one undercut surface in the extraction direction of the cores. In actual practice the impellers manufactured using the above mentioned known procedure have parallel flanges; such arrangement is a limit for the fluid dynamic performances of the impeller.

Secondly, the equipment known is complicated and expensive to manufacture in particular with regard to the movement mechanisms of the cores which have to ensure extreme accuracy of the relative movement between the cores and the piece so as not to damage said piece.

Thirdly, it is difficult to obtain a good thermic conditioning of the mould, in that, often, it is not possible to place the thermic conditioning devices (heating elements, cooling circuits, etc.) in the optimal position; that is principally due to the complexity of the mould.

It is also known a method for obtaining closed impellers with undercut flanges which envisages the manufacturing of the impellers in two separate parts by means of moulding inside two different moulds. Said parts are subsequently assembled by means of, for example, welding, gluing or others. Said known method involves however, the use of more equipment both for the manufacturing and the assembling of the single parts of the impellers; said method is also not very advantageous because of the complex production cycle, which envisages more separate phases, and the problems involving the management of the warehouse. A further drawback is represented by the fact that, due to the continuous manual intervention, above all, in the assembling phase, the quality of the product obtained is not constant and is not repeatable. Furthermore the product obtained is not structurally homogeneous and it has mechanical characteristics of a low quality with respect to the product obtained as one single piece.

The present invention relates to a process and equipment for manufacturing closed impellers as one single piece with undercut flanges. An equipment, which is decribed in the preamble of claim 5, is known, for example, from EP 0392347 or DE 1806757.

However, in known processes and relative equipment of this type, the movement mechanisms of the cores are complicated and expensive to manufacture. They have the problem to ensure extreme accuracy of the relative movement between the cores and the piece so as not to damage the piece.

The main aim of the present invention is to eliminate the above mentioned limits and drawbacks of the known technique by providing a procedure of the type object of the present invention, which permits the manufacturing of closed impellers as one single piece wherein, on the flanges, is provided at least an undercut surface in the extraction direction of the cores.

This aim is achieved by the procedure object of the present invention, as defined in claim 1.

Preferably, the filling comes about by use of the injection of plastic material.

A further aim of the present invention is to supply an equipment which is simple and economical to manufacture in order to carry out the above mentioned procedure.

This aim is achieved by the equipment object of the present invention, as defined in claim 5.

An advantage of the present invention is represented by the simplicity and the reliability of the extraction means of the cores.

Further embodiments of the process and equipment are defined in the appended dependent claims.

Further characteristics and advantages of the present invention will better emerge from the detailed description that follows, of a preferred, but not exclusive embodiment here illustrated in the form of a non-limiting example, in which:

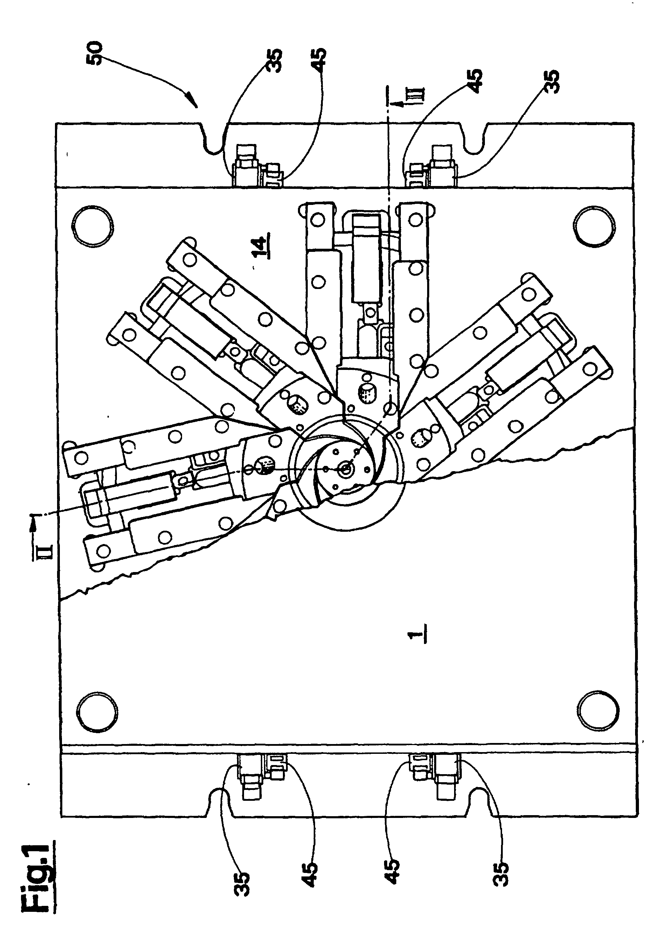

- Figure 1 shows a viewin vertical elevation of the equipment, object of the present invention, in a closed configuration, with some parts removed so as to better evidence others;
- Figure 2 shows a schematic section taken along line II-II of figure 1, with some parts in a sectioned view;
- Figure 2a shows, on an enlarged scale, a particular of figure 2 comprising the tooth 38 of the coupling bracket 35;
- Figure 3 shows, on an enlarged scale, a particular of figure 1 pointing out an upper carriage 2 and the relative lower carriage 7;
- Figure 4 shows, on an enlarged scale, a particular of figure 2 comprising the moulding cavity 21;

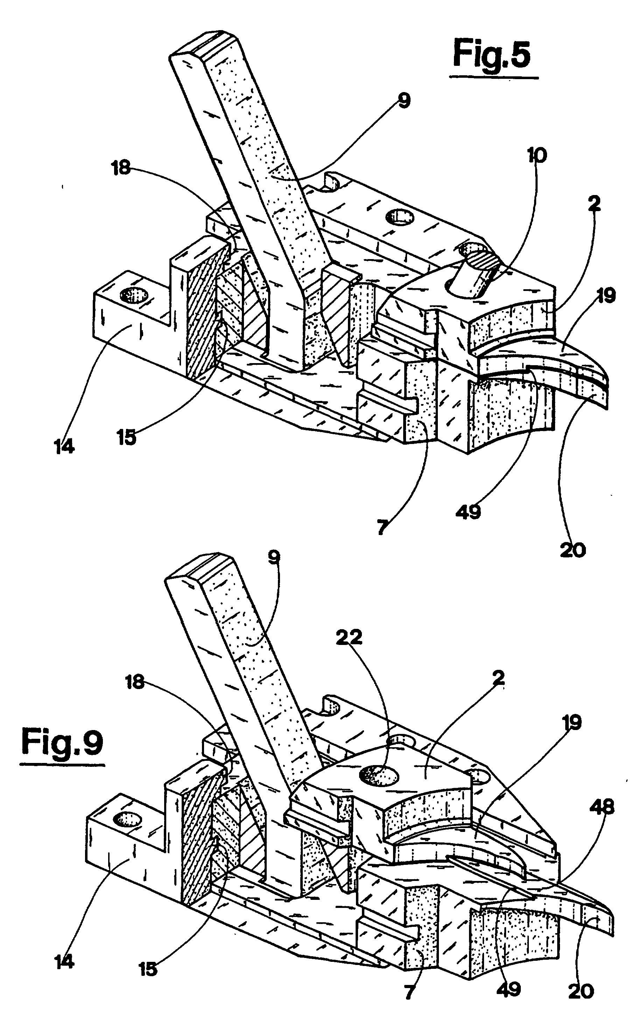

- Figure 5 shows a perspective view of the particular illustrated in figure 3;
- Figure 6 shows the section of figure 2 after the filling of the moulding cavity 21 and shows the equipment in a first configuration which is taken up during its opening;
- Figure 6a shows, in the first configuration of figure 6, the particular illustrated in figure 2a;
- The figures 7 and 8 show, in section, two particulars of the equipment in a second and, respectively, in a third open configuration;
- Figure 9 shows the perspective view of figure 5 in the configuration of figure 8;
- Figure 10 shows, in section, a part of the equipment in a forth open configuration;
- Figure 11 shows, on an enlarged scale, a particular of figure 10;
- Figure 12 shows the particular of figure 11 with the equipment in a fifth open configuration;
- Figure 13 shows a particular of the equipment in the configuration of figure 12 pointing out the spring 47 and the end 52 of the support stud 3;
- Figure 14 shows a section of the equipment in a sixth configuration.

With reference to the above mentioned figures, 50 denotes, as a whole, an equipment for the manufacturing of a (closed) double flange impeller. The flanges of said impeller are not parallel, but converge towards the periphery of the impeller itself.

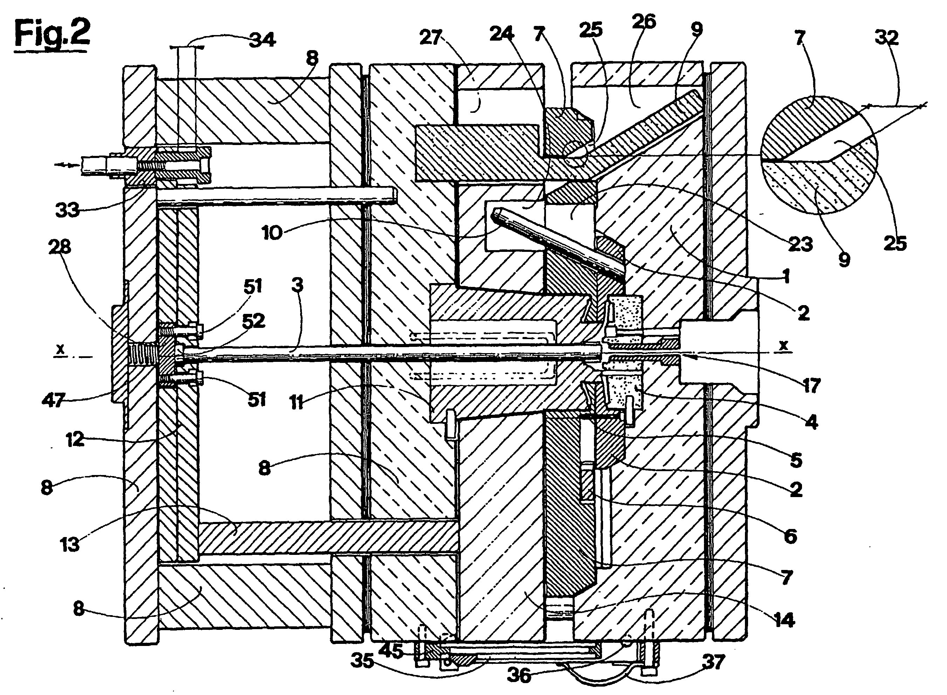

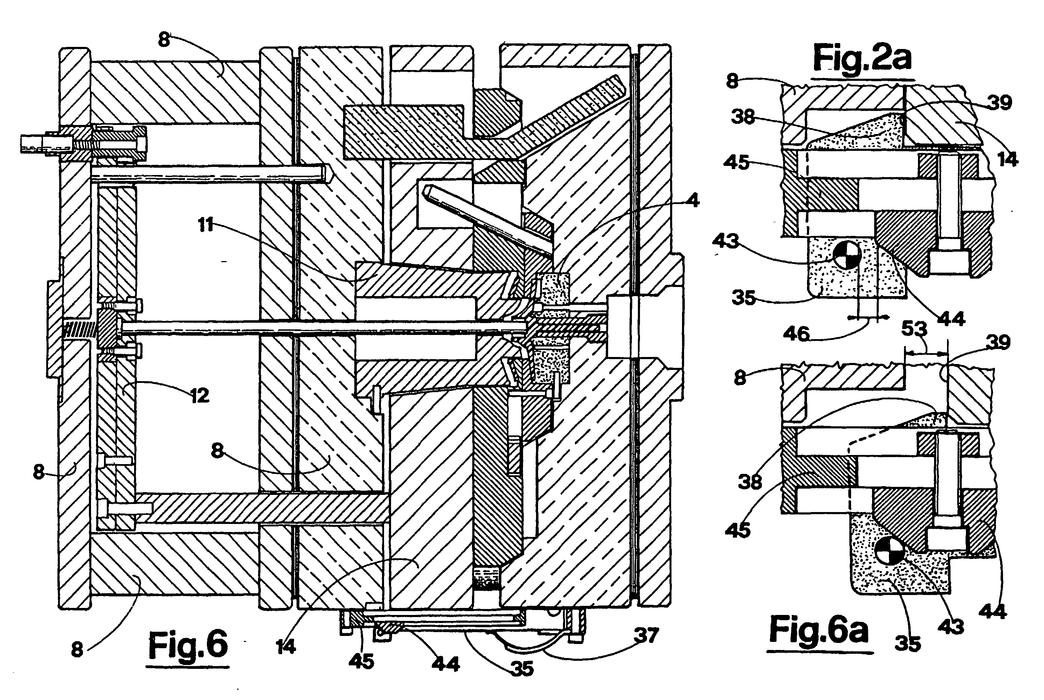

The equipment 50 is envisaged for the mounting onto a press for the injection moulding of plastic material. The elements of the press mentioned in this description are known but not shown in the figures. The press includes a fixed plane placed on the right of figure 2 (injection side) and a mobile plane placed on the left of figure 2 (extraction side). The mobile plane moves by means of controls in the direction of a horizontal axis x.

The equipment 50 comprises an injection side plate 1 and an extraction side plate 8. The plates 1 and 8 are coaxially mounted with axis x onto the fixed plane and, respectively, onto the mobile plane of the press. The means for fixing the plates to the planes of the press are known but not illustrated. A injection unit of the press injects the material. in a plastic state into a moulding cavity 21 of the equipment 50 through an inlet 17 on the injection side plate 1.

The plates 8 and 1 have respectively a first matrix also called extraction side matrix 11 and a second matrix also called injection side matrix 4. The matrixes 4 and 11 are coaxially opposed with respect to axis x and can be axially approached or moved away one with respect to the other by means of controls, as will be better described in what follows.

A third plate 14 is connected to the mobile plane of the press by means of columns 13 and an extraction table 12. The extraction table 12 and the relative third plate 14 are mobile by means of controls with respect to extraction side plate 8 in the direction of the axis x, thanks to at least one rod 33 which is connected to the extraction table 12 with a pre-established play in the direction of the axis x. Figure 2 shows the rod 33 completely moved towards the right with respect to the extraction table 12. 34 denotes the entity of the play. The rod 33 is provided for the connection to the translator means of a known type (for example at least an oleodynamic piston) positioned on the mobile plane of the press, which control a translation of the extraction table 12 in a horizontal direction x.

The third plate 14 is removably constrained to the injection side plate 1 by means of coupling brackets 35. Each coupling bracket 35 is pivoted, on the pin 36, to the injection side plate 1 and is maintained in an engaging position by means of a spring 37. A second bracket 45, rigidly connected to the extraction side plate 8, is coupled to each coupling bracket 35.

In the engaging position (figure 2a) each coupling bracket 35 has a tooth 38 inserted into a shoulder 39 of the third plate 14. To each coupling bracket 35 is fixed a pin 43 provided for interacting with a profile or cam element 44, which is positioned on the respective second bracket 45. The active surface of the profile element 44, in this case, is represented by an inclined plane. In the closed configuration of the filling of the equipment 50, the pin 43 and the active surface of the profile element 44 are at a pre-established reciprocal distance in the direction of the axis x. In figure 2a, 46 denotes the entity of said distance.

A plurality of lower carriages 7 is slidably coupled to the third plate 14. Each lower carriage 7 can slide on the respective first rectilinear sliding guides 15 positioned on the third plate 14. Coupled to each lower carriage 7 is envisaged an upper carriage 2 which can slide on the respective second rectilinear sliding guides 18 which are positioned on the third plate 14 and are preferably parallel to the first guides 15.

Each upper carriage 2 is fitted with a limit switch pin 5, which is provided for interacting with a respective limit switch plier 6 which is mounted onto each lower carriage 7. The limit switch pin 5 and the relative pliers 6 are used for blocking the upper carriages 2 to the respective lower carriages 7, as will be better described in the following description.

It is envisaged a plurality of cores 19, 20 each of which is composed of a first part of a core 19 obtained as a single piece with a respective upper carriage 2 and of a second piece of a core 20 obtained as a single piece with a respective lower carriage 7. The cores 19, 20 can be inserted between the above mentioned matrixes 4 and 11 so as to define the moulding cavity 21 of a closed impeller. In particular, the cores are used for delimiting the blades and the relative channels of the impeller.

The first part of a core 19 is shaped and placed in such a way so as not to have undercut surfaces with respect to a piece 40, that is the impeller which can be obtained by filling the moulding cavity 21 and so as to be therefore easily extractable according to an extraction direction which is preferably rectilinear. Said direction coincides with that of the second guide 18 namely with the sliding direction of the upper carriages 2 on the third plate 14.

The parts of a core 19 and 20 can have, with respect to one or both of the matrixes 4 and 11, an undercut in the extraction direction. As will be better described in the description that follows, the presence of said undercut does not jeopardise the possibility to extract the parts of a core. Said undercut can be sometimes necessary for obtaining a better fluid dynamic performance of the impeller.

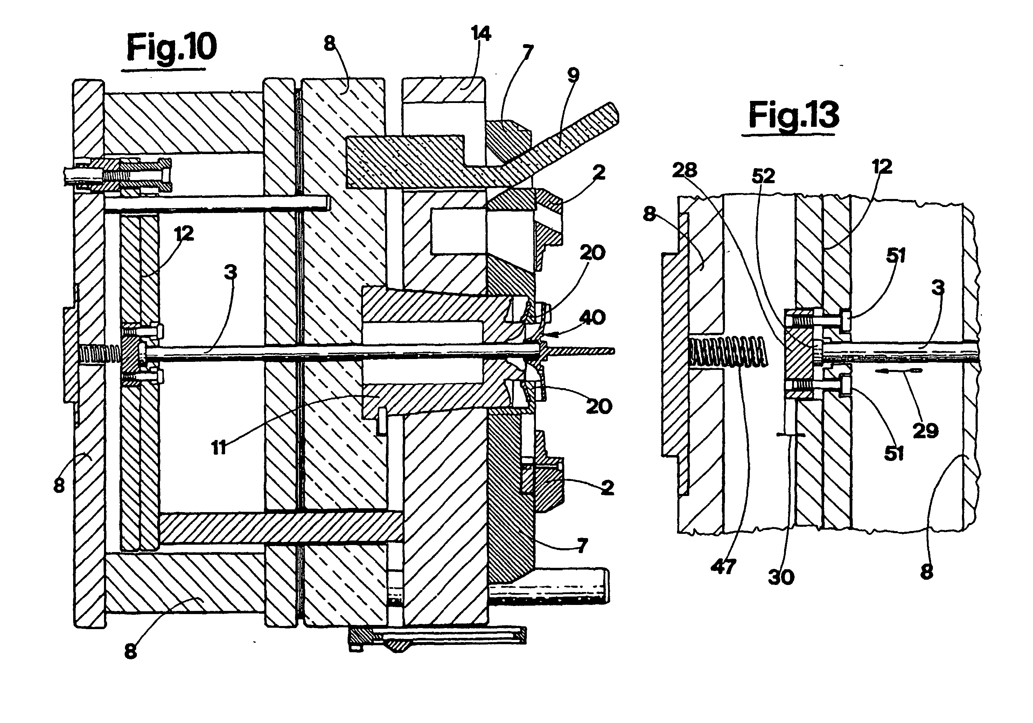

Each first part of a core 19 is separable from the respective second part of a core 20; in other words, each core is split into two parts. The separation comes about in correspondence with two surfaces which face each other and fit together, one belonging to the first part of a core and the other belonging to the second part of a core. In figure 9, 48 denotes the separating surface of the second part of a core 20. Said separating surfaces, which are almost parallel to the above mentioned extraction direction of the parts of a core, preferably show an offset 49 which extends longitudinally in the extraction direction.

Coupled to each upper carriage 2 is envisaged a pin 10, preferably cylindrical, fixed to the injection side plate 1. Each pin 10 is inclined with respect to the axis x of an angle "alpha" preferably comprised between 10° and 30°. In every upper carriage 2 is obtained a through hole 22 with the axes parallel to the pin 10 and the diameter slightly higher than the diameter of the pin 10 itself which can be inserted inside the relative hole 22. Each pin 10 is housed in a cavity 23 obtained in the respective lower carriage 7 and in a respective cavity 24 which is obtained on the third plate 14. The above mentioned cavities 23 and 24 are shaped and placed in such a way that the pins 10 do not interfere with either the lower carriages or the third plate 14.

A pin 9 is coupled to each lower carriage 7. Said pin 9 is preferably prismatic having rectangular sections and is fixed to the extraction side plate 8. Each prismatic pin 9 is inclined with respect to the axis x of an angle β preferably comprised between 10° and 30°. In each lower carriage 7 7 is obtained a through hole 25 with an axis parallel to the relative prismatic pin 9. The prismatic pin 9 can be inserted inside the relative through hole 25. The base of each prismatic pin 9 is housed in a respective cavity 27 obtained on the third plate 14. A plurality of cavities 26 is also obtained on the injection side plate 1. When the equipment 50 is closed, in each cavity 26 is placed an end of a respective prismatic pin 9. The cavities 26 and 27 are shaped and placed in such a way that the prismatic pins 9 do not interfere either with the injection side plate 1 or with the third plate 14. The cylindrical pins 10 together with the inside wall of the holes 22 and the prismatic pins 9 together with the inside wall of the holes 25 give rise to two couples of inclined surfaces provided for interacting between themselves.

In the closed configuration, said surfaces have a reciprocal predetermined distance in the direction of the axis x.

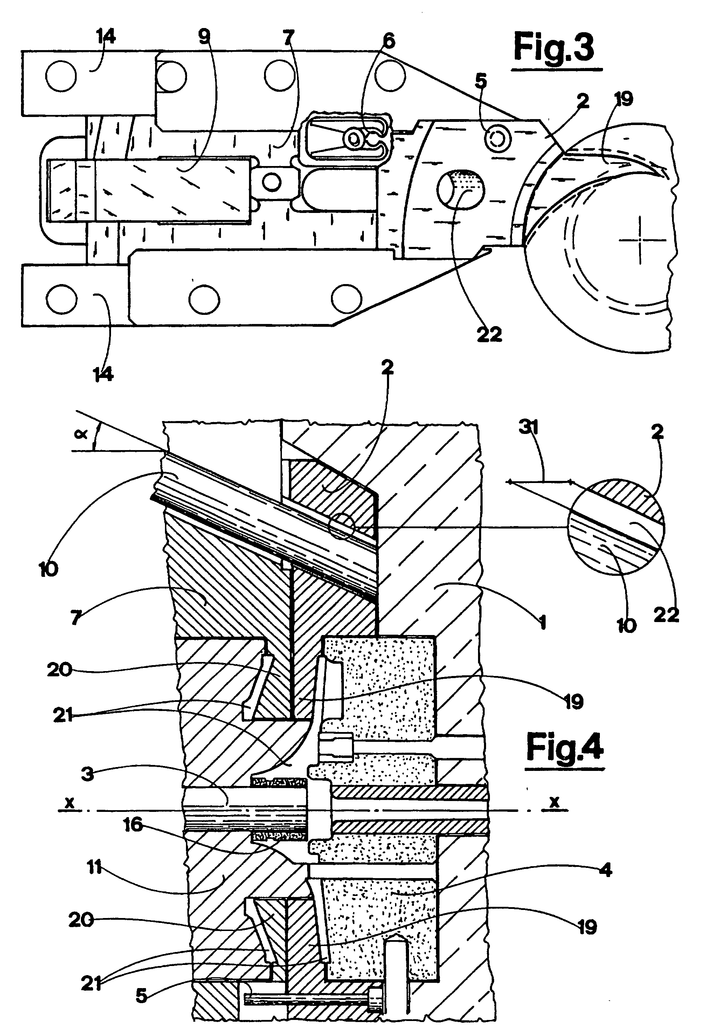

In the figures 4 and 2, 31 and 32 respectively denote the entity of said distances.

A cylindrical support stud 3 with axis x is placed, in a cavity inside the extraction side matrix 11 and in a cavity inside the extraction side plate 8, and is idly slidable in an axial direction with respect to these elements.

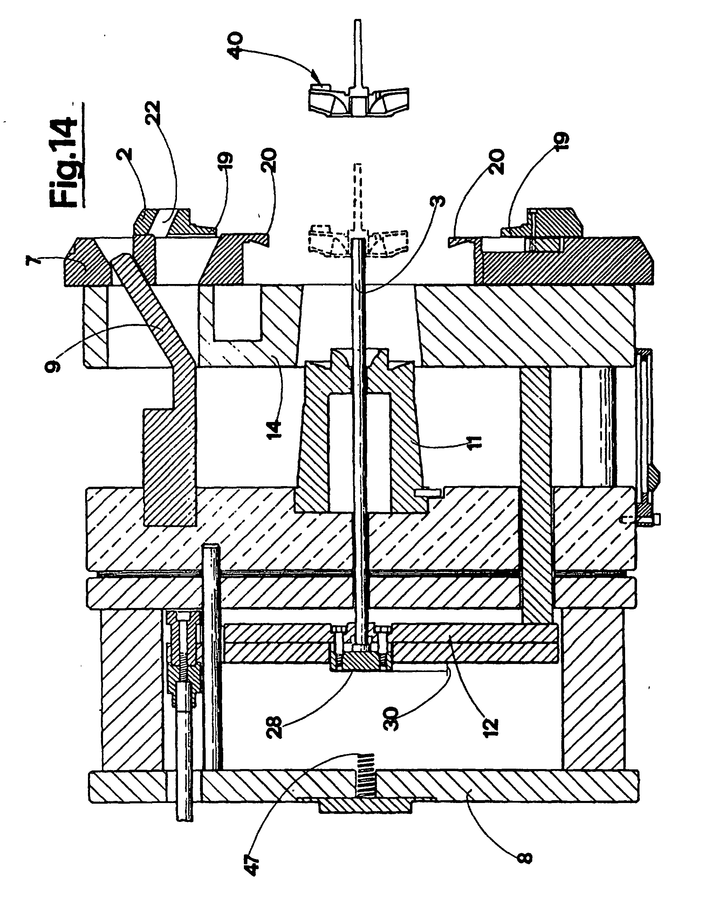

Also, the support stud 3 has an end 52 constrained to the extraction table 12 with the possibility to axially slide, with respect to the table itself, with a pre-established axial play. In figures 13 and 14, 30 denotes the entity of said play being adjustable by means of screws 51 coupled to an element 28, said element being slidingly coupled to the extraction table 12 with the sliding axis x. The end 52 of the support stud 3 on one side strikes against the extraction table and on the other side against the sliding element 28. In turn, the sliding element 28 and the heads of the screws 51 strike on opposed sides against the extraction table 12 giving rise to the play 30.

In the configuration in figure 2 the end 52 of the support stud 3 is maintained striking against the extraction table 12 and therefore the stud itself is not permitted any movement.

A spring 47 has an end fixed to the extraction side plate 8 and an opposed end which presses on the element 28 and consequently on the stud 3 towards the left (with reference to figure 2).

A metallic insert 16 is inserted into the end of the support stud 3 which end is opposed to the end 52 which is constrained to the extraction table 12. The insert 16 is placed inside the moulding cavity 21 and is destined to be a part of the moulded piece 40 by means of the equipment 50. Thermic conditioning means of the various parts constituting the equipment 50 are also shown, even if not explicitly mentioned.

With reference to the above mentioned figures from 6 to 14, hereunder is described the working of the equipment 50 starting from the closed configuration described above. The description of a preferred embodiment of the procedure object of the present invention is included in the following description of the working of the equipment 50.

With the equipment in a closed configuration occur both the filling of the moulding cavity 21 using cast material, in this case plastic material, and the subsequent solidifying of the material so as to manufacture the piece 40 (impeller).

After the piece is solidified the opening of the equipment 50 comes about, which opening initially envisages a movement along the axis x towards the left of the mobile plane of the press and a movement of the parts of the equipment integral to it. In particular, the extraction side plate 8, the relative matrix 11 and the second bracket 45, bearing the profile element 44, move towards the left. The third plate 14 and the relative lower 7 and upper 2 carriages remain still, being coupled to the injection side plate 1 by means of the coupling brackets 35.

During said movement of the mobile plane of the press the rods 33, which are connected to the respective oleodynamic pistons mounted onto the press, move together with the mobile plane while the extraction table 12 remains substantially still. All this is permitted by the presence of the play 34 between the rod and the table.

In actual practice, the extraction table 12 moves away from the left wall of the extraction side plate 8.

In this phase there is the separation of the extraction side matrix 11 from the piece 40.

In an initial section of the run of the mobile plane of the press, corresponding to the distance denoted by 46, the pin 43 and the profile element 44 do not interact.

Once said initial section has been run and by continuing the run of the mobile plane of the press, the profile element 44 acts on the pin 43 forcing the tooth 38 to move towards the disengaging position wherein it releases the third plate 14.

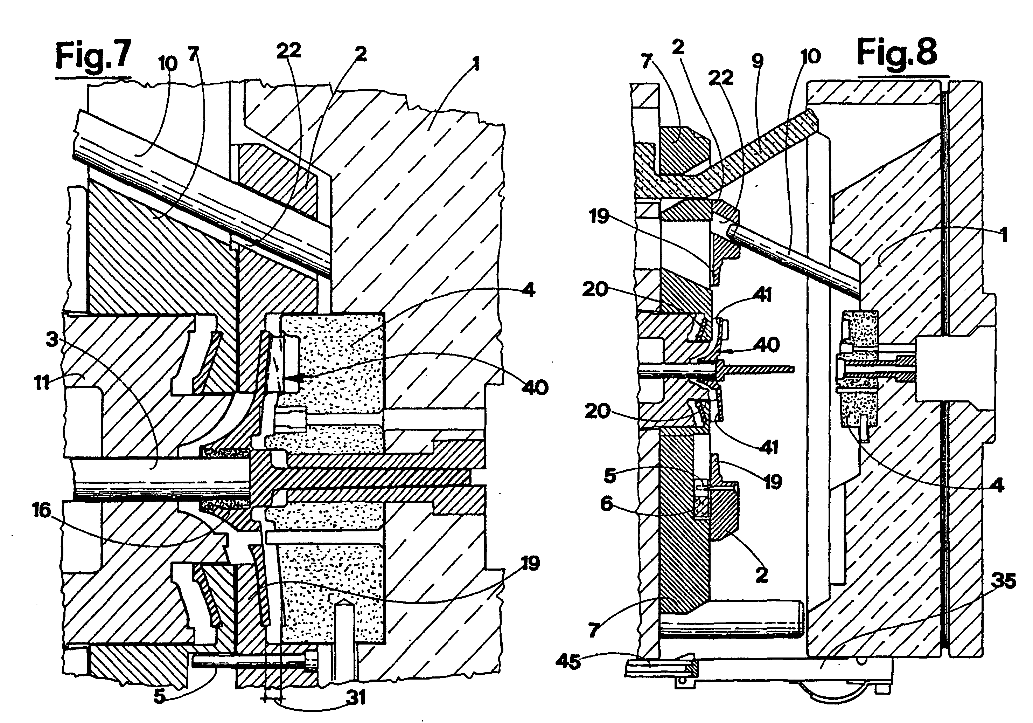

When the releasing of the tooth 38 takes place (figures 6 and 6a), the mobile plane of the press has performed a run, denoted with 53, which is less than the play 34 between the rod 33 and the extraction table 12.

In this configuration the extraction side matrix 11 has detached from the piece 40, in such a way so as to be totally disengaged from the first part of a core 19, as is more evident in the enlargement of figure 7 which is relative to a subsequent phase in which however, the relative position between the part of a core 19 and the extraction side matrix 11 does not vary with respect to figure 6.

Continuing in the run towards the left of the mobile plane of the press it occurs that, as a result of the disengaging of the tooth 38, the third plate 14 moves together with the extraction side plate 8. In this way the piece 40 detaches from the injection side matrix 4.

Figure 7 shows that the unit composed of the third plate 14 and of the lower 7 and upper 2 carriages has slightly moved towards the left of the minimum quantity necessary for the inside walls of the respective holes 22 to strike against the cylindrical pins 10. During said small movement (corresponding to the above mentioned distance 31), the inclined surfaces of the cylindrical pins 10 and of the holes 22 do not interact between themselves. In actual practice the cylindrical pins 10 do not interact with the upper carriages 2 which therefor remain still with respect to the piece 40.

Still continuing along the run of the mobile plane of the press towards the left (figure 8 and 9), the injection side matrix 4 moves further away from the piece 40 and each cylindrical pin 10 starts to interact with the respective upper carriage 2 in such a way so as to bring about the sliding on the second guides 18. In this way the first parts of a core 19 which are integral to the upper carriages 2 are extracted from the piece 40.

During said extraction no interference can occur between the first parts of the cores 19 and the extraction side matrix 11, this being completely disengaged from the first parts of the cores 19. The initial phase, described above, in which the extraction side matrix 11 is removed from the piece 40, is necessary in order to permit the extraction of the first parts of the cores 19 also in the presence of undercuts between said first parts of the cores 19 and the extraction side matrix 11 in the direction of the extraction.

Each first part of a core 19, once extracted, leaves an empty space comprised between an internal surface 41 of the piece 40 and the respective second part of a core 20. The above mentioned internal surface 41 is the surface of the piece which, in the previous phases, is in direct contact with the respective first part of a core 19. As will be described, said empty space permits, during the extraction of the relative, second part of a core 20, the approaching of the second part of a core 20 and the above mentioned internal surface 41 of the piece.

In the configuration of figure 8, each cylindrical pin 10 is on the verge of completely disengaging itself from the relative upper carriage 2. In this configuration the pin of the limit switch 5 of each upper carriage 2 is gripped by the respective limit switch pliers 6 which are positioned on the lower carriage 7. In this way occurs the removable blocking of the upper carriages 2 to the respective lower carriages 7. Also in this configuration, the first parts of the cores 19 are completely extracted from the piece 40. At this stage the extraction of the second part of a core 20 is carried out.

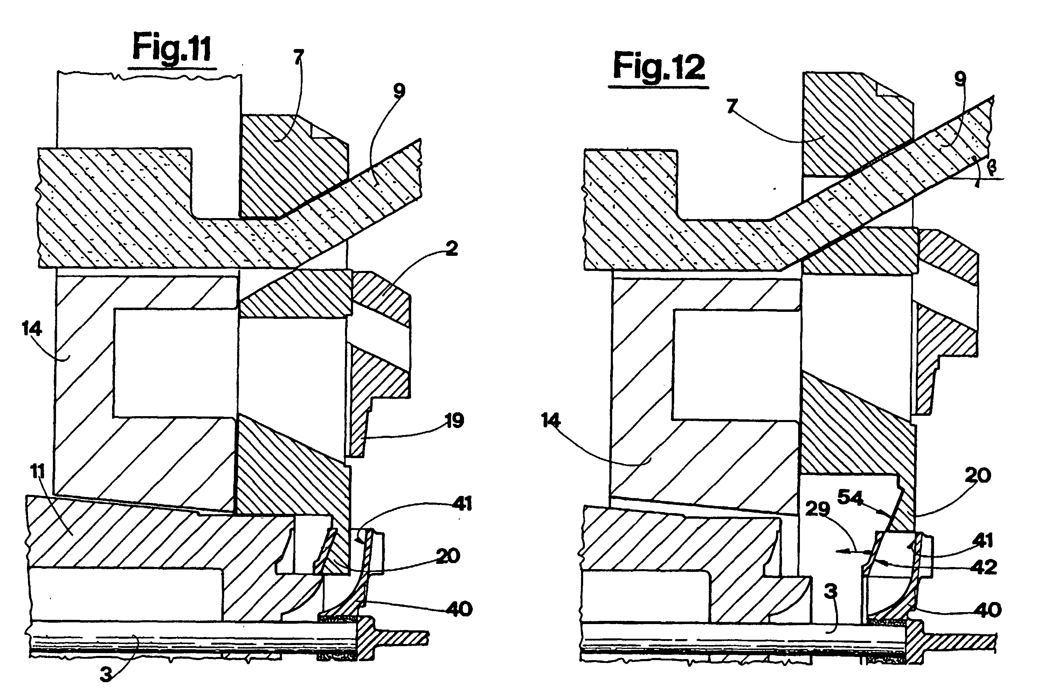

The extraction table 12 is moved towards the right, with respect to the extraction side plate 8 (figures 10 and 11) pulling with it: the third plate 14, the lower carriages 7, the support stud 3 of the insert 16 and the piece 40. Said piece 40 remains in contact with the second parts of a core 20 and consequently moves further away from the extraction side matrix 11.

During the initial section of the run of the extraction table 12, corresponding to the axial distance 32 between the prismatic pins 9 and the relative holes 25, the lower carriages 7 do not interfere with the relative prismatic pins 9 and the second parts of a core 20 therefor do not carry out the relative movements with respect to the piece 40.

Continuing the run of the extraction table 12, the prismatic pins 9 and the walls of the holes 25 enter into reciprocal contact. The relative contact surfaces are parallel between themselves and inclined with respect to the advancing direction x of the extraction table 12. Consequently, the lower carriages 7 are dragged to slide onto the third plate 14, moving away from the piece 40 (figure 12).

In figure 12, 54 denotes the surfaces of the second parts of a core 20 in contact with the piece. Said surfaces start to slide with respect to the corresponding surfaces of the piece denoted by 42. The surfaces 54 and 42 are undercut with respect to the direction of the extraction. The extraction of the second parts of a core 20 is made possible thanks to the presence of a free space comprised between the second part of a core 20 and the opposed internal surface 41 of the piece, and thanks to the fact that the support stud 3 is free to move axially towards the left with respect to the extraction table 12.

In fact, as a result of the pushing action of the surfaces 54 onto the surfaces 42 the piece 40 performs, with respect to the second parts of a core 20, a relative axial movement towards the left together with the support stud 3, as shown by an arrow 29. All this comes about while the extraction table 12 advances towards the right with respect to the extraction side plate 8. During the relative movement between the second parts of a core 20 and the piece 40 occurs the above mentioned approaching of the second parts of a core 20 to the internal surfaces 41 inside the space previously occupied by the first parts of a core 19.

Figure 12 shows the second parts of a core 20 after the extraction from the piece 40. In this configuration of the equipment 50, the element 28 protrudes from the extraction table 12 by an amount corresponding approximately to the axial play 30 of the stud 3 as well as to the undercut of the surfaces 42 of the piece and 54 of a core.

The element 28 is brought into said position by means of the thrust by the end 52 of the support stud 3 which, as has been described, during the extraction of the second parts of a core 20 is in turn thrusted towards the left with respect to the extraction table 12.

During the course of the run of the extraction table a further moving away of the second parts of a core 20 from the piece 40 comes about. At the end of the run said piece 40 is extracted from the support stud 3, for example manually (figure 14). At this stage the equipment is brought back into the closed configuration so as to mould a new piece.

Firstly, a new insert 16 is inserted onto the left end of the support stud 3 and then the extraction table 12 is recalled towards the left.

During the return run of the extraction table 12 the lower carriages 7 are controlled by the prismatic pins 9 so as to slide onto the respective first guides 15 in the opposite direction with respect to the previous direction. The lower carriages 7 drag with themselves the upper carriages 2 which slide onto the respective second guides 18. The return run of the extraction. table 12 stops when the lower carriages 7 have returned to the position initially taken up with the equipment 50 closed.

At this stage the extraction table 12 is distant from the left wall of the extraction side plate 8 and the extraction side matrix 11 is distant from the lower carriages 7. The control rod 33 of the extraction table 12 is completely moved towards the left with respect to the extraction table 12. Starting from this configuration, a return run of the mobile plane of the press is controlled.

In an initial section of said return run, that is until the rod 33 is completely moved towards the right with respect to the extraction table 12, said extraction table 12 is stationary with respect to the extraction side plate 8.

At the end of this initial section of the return run, the extraction side matrix 11 takes up again the relative position initially taken up, with the equipment 50 closed, with respect to the lower carriages 7.

During this initial section of the return run, the element 28 which is still moved towards the left with respect to the extraction table 12, as shown in figure 14, is moved towards the right by means of the spring 47 dragging with it the support stud 3 and the relative insert 16. In this way or thanks to the presence of the spring 47, the extraction side matrix 11 is prevented from striking against the insert 16 which in turn is prevented from moving away or actually extracted from its own seat on the support stud 3.

Continuing the return run of the mobile plane of the press, the through holes 22 on the upper carriages 2 are couple to the cylindrical pins. Consequently the upper carriages 2 move back into the initial position of figure 2. Likewise, the coupling brackets 35 re-engage the third plate 14. The equipment 50 is brought back to the closed configuration in which it is ready for a new moulding cycle.

The present invention permits to place the thermic conditioning devices (heating elements, cooling circuits, etc) in the best possible position so as to obtain the desired thermic effect.

## Claims

1. A process for manufacturing a closed impeller, comprising the following steps:
- providing a moulding cavity (21) defined by at least a plurality of cores inserted between two matrices (4, 11) coaxially opposed with respect to an axis (x), each core being composed of a first part (19) and of a second part (20), a first matrix (11) interacting with both parts (19), (20) of the cores and a second matrix (4) interacting with the first parts (19) of the cores in order to define the moulding cavity (21);
- filling the moulding cavity (21) by injecting a material in a castable state and subsequently solidifying the material, so as to manufacture the impeller (40);
- moving the first matrix (11) along said axis (x) in order to separate the first matrix (11) from the impeller (40);
- during said movement, releasably connecting the impeller and the cores to the second matrix (4) at least until the first matrix (11) is completely disengaged from the first part (19) of each core ;
- after said complete disengagement, releasing said connection of the impeller (40) and the cores to the second matrix (4);
- moving the impeller (40) along said axis (x) in order to separate the impeller (40) from the second matrix (4);
- during separation of the impeller (40), extracting transversally to the axis (x) the first part (19) of each core which is in contact with an internal surface (41) of the impeller, leaving thereby a space between the internal surface (41) of the impeller and the second part (20) of each core the extraction being performed by means of a contacting interaction of inclined surfaces with sliding carriages (2) wherein each inclined surface is inclined with respect to the direction in which the impeller (40) is moving and each carriage (2) bears a respective first part (19) of each core;
- extracting the second part (20) of each core transversally to the axis (x) and simultaneously moving the second part (20) of each core toward said internal surface (41) of the impeller.

2. The process according to claim 1, **characterised in that** extraction of the first and second parts of each core, respectively (19, 20), is performed by moving the cores in a straight transverse direction with respect to the impeller (40); and in that the impeller (40) is left free to move axially at least during extraction of the second part (20) of the core.

3. The process according to claims 1 or 2, **characterised in that** after the extraction the first part (19) of each core is releasably connected to the second part (20) of the core.

4. The process according to any one of the preceding claims, **characterised in that**, after extraction of the first part (19) of each core, the impeller (40) and the first matrix (11) are separated from one another in two steps: a first step, at least until the complete disengagement of said first matrix (11) from the second part (20) of each core, whereby the impeller (40) and the second part (20) of each core do not perform relative movements with regard to each other; and a second step, in which the impeller (40) and the second part (20) of each core perform a relative movement of extraction which is dependent to the separation movement of the first matrix (11) along the axis (x) and which is transversal to said separation movement.

5. An equipment for manufacturing a closed impeller as defined in the preceding claims, comprising :
- two matrices (4, 11) which are coaxially opposite with respect to an axis (x) and which can be axially approached or separated;
- a plurality of cores which can be inserted between said two matrices (4, 11) so as to define a moulding cavity (21) of a closed impeller, each core being composed of a first part (19) and a second part (20) which can be separated one from another, the first part (19) of each core being shaped and placed in such a way so as to be extracted in an extraction direction of the moulding cavity (21) and in such a way so as to leave, once extracted, a space which permits the respective second part (20) of the core a movement in said space in a transversal direction to said extraction direction;
- means for extracting said plurality of cores inserted between the matrices (4, 11);
**characterised in that**:
- the equipment is destined for use in a press having a fixed plane and a mobile plane, a first matrix (11) being connected to the mobile plane and a second matrix (4) being connected to the fixed plane of the press;
- the equipment comprises means (35, 44) for releasably connecting said parts (19, 20) of each core to the second matrix (4) only for an initial part of the total run of the mobile plane;
- said extracting means (9, 10) comprise a first plurality of pins (10), each of which pins is inclined with respect to the direction in which the matrices are separated and each of which pins guides the extraction movement of a respective first part (19) of a core during separation of the two matrices;
- said extracting means (9, 10) comprise also a second plurality of pins (9) each of which pins is inclined with respect to the direction in which the matrices are separated and each of which pins guides the extraction movement of a respective second part (19) of a core during separation of the two matrices.

6. The equipment according to claim 5, **characterised in that** said first plurality of pins (10) is fixed to the second matrix (4) and said second plurality of pins (9) is fixed to the first matrix (11).

7. The equipment according to claims 5 or 6, **characterised in that** said means for connecting said parts (19, 20) of each core to the second matrix (4) comprise:
- at least a coupling bracket (35) which moves with the second matrix (4) between an engaging position and a disengaging position in which said coupling bracket, respectively, prevents and permits separation of the parts (19), (20) of each core from the second matrix (4);
- a profile element (44) which interacts with said coupling bracket (35) and which is associated to the first matrix (11) and is destined to control a movement of the respective coupling bracket (35) from the engaging position to the disengaging position.

8. The equipment according to claims 5 to 7, **characterised in that** said cores are mounted onto a plate (14) connected to an extraction table (12) by means of column (13), the table (12) being connected with known-type means for translating, which are positioned on the mobile plane of the press; the extraction table (12) being connected to said means for translating with play (34) in the direction (x) of the run of the mobile plane of the press; said play (34) being of a value which is not lower than the part of the total run of the mobile plane in which said means for connecting (35, 44) are active.

## Patentansprüche

1. Verfahren zur Herstellung eines geschlossenen Laufrades, enthaltend die folgenden Phasen:
- Vorbereitung einer Gussform (21), beschrieben durch wenigstens eine Anzahl von Kernen, eingesetzt zwischen zwei Matrizen (4, 11), die sich im Verhältnis zu einer Achse (x) koaxial gegenüberliegen, wobei jeder Kern aus einem ersten Teil (19) und aus einem zweiten Teil (20) hergestellt ist, wobei eine erste Matrize (11) mit beiden Teilen (19), (20) der Kerne zusammenwirkt, und wobei eine zweite Matrize (4) mit den ersten Teilen (19) der Kerne zusammenwirkt, um so die Gussform (21) zu beschreiben;
- Füllen der Gussform (21) durch Einspritzen eines Materials in einem gussfähigen Zustand und anschliessendes Erhärten des Materials, so dass das Laufrad (40) hergestellt wird;
- Verschieben der ersten Matrize (11) entlang der genannten Achse (x), um die erste Matrize (11) von dem Laufrad (40) zu trennen;
- während der genannten Verschiebung das lösbare Befestigen des Laufrades und der Kerne an der zweiten Matrize (4), wenigstens solange, bis die erste Matrize (11) vollkommen von dem ersten Teil (19) eines jeden Kerns freigegeben ist;
- nach der genannten kompletten Freigabe das Lösen der genannten Befestigung des Laufrades (40) und der Kerne an der zweiten Matrize (4);
- Verschieben des Laufrades (40) entlang der genannten Achse (x), so dass das Laufrad (40) von der zweiten Matrize (4) getrennt wird;
- während des Trennens des Laufrades (40) das Abziehen quer zu der Achse (x) des ersten Teils (19) eines jeden Kerns, welcher sich im Kontakt mit einer internen Oberfläche (41) des Laufrades (40) befindet, wobei ein Freiraum zwischen der internen Oberfläche (41) des Laufrades und dem zweiten Teil (20) eines jeden Kerns gelassen wird, wobei das Abziehen mit Hilfe eines Zusammenwirkens im Kontakt von schrägen Oberflächen mit Gleitschlitten (2), bei denen jede schräge Oberfläche im Verhältnis zu der Richtung geneigt ist, in welcher sich das Laufrad (40) bewegt und jeder Schlitten (2) einen jeweiligen ersten Teil (19) eines jeden Kerns trägt;
- Abziehen des zweiten Teils (20) eines jeden Kerns quer zu der Achse (x) und gleichzeitiges Verschieben des zweiten Teils (20) eines jeden Kerns in Richtung der genannten internen Oberfläche (41) des Laufrades.

2. Verfahren nach Patentanspruch 1, **dadurch gekennzeichnet, dass** das Abziehen der ersten und zweiten Teile eines jeden Kerns, jeweils (19, 20), durch das Verschieben der Kerne in einer geraden, querverlaufenden Richtung im Verhältnis zu dem Laufrad (40) erfolgt; und dadurch, dass das Laufrad (40) frei ist, sich wenigstens während des Abziehens des zweiten Teils (20) des Kerns axial zu bewegen.

3. Verfahren nach den Patentansprüchen 1 oder 2, **dadurch gekennzeichnet, dass** nach dem Abziehen der erste Teil (19) eines jeden Kerns lösbar an dem zweiten Teil (20) des Kerns befestigt ist.

4. Verfahren nach einem beliebigen der vorstehenden Patentansprüche, **dadurch gekennzeichnet, dass** nach dem Abziehen des ersten Teils (19) eines jeden Kerns das Laufrad (40) und die erste Matrize (11) in zwei Phasen voneinander getrennt werden: einer ersten Phase, wenigstens bis zur vollständigen Freigabe der genannten ersten Matrize (11) von dem zweiten Teil (20) eines jeden Kerns, bei welcher das Laufrad (40) und der zweite Teil (20) eines jeden Kerns keine entsprechenden Bewegungen im Verhältnis zueinander ausführen; und einer zweiten Phase, bei welcher das Laufrad (40) und der zweite Teil (20) eines jeden Kerns eine entsprechende Bewegung des Abziehens ausführen, welche abhängig ist von der Trennbewegung der ersten Matrize (11) entlang der Achse (x), und welche quer zu der genannten Trennbewegung erfolgt.

5. Vorrichtung zur Herstellung eines geschlossenen Laufrades, wie in den vorstehenden Patentansprüchen beschrieben, enthaltend:
- zwei Matrizen (4, 11), welche im Verhältnis zu einer Achse (x) sich gegenüberliegend angeordnet sind, und welche axial einander genähert oder voneinander entfernt werden können;
- eine Anzahl von Kernen, die zwischen die genannten beiden Matrizen (4, 11) eingesetzt werden können, so dass eine Gussform (21) für ein geschlossenes Laufrad beschrieben wird, wobei jeder Kern aus einem ersten Teil (19) und aus einem zweiten Teil (20) hergestellt ist, die voneinander getrennt werden können, und wobei der erste Teil (19) eines jeden Kerns auf solche Weise geformt und angeordnet ist, dass er in einer Abzugsrichtung der Gussform (21) herausgezogen werden kann, und auf solche Weise, dass er, sobald er herausgezogen ist, einen Freiraum lässt, welcher dem entsprechenden zweiten Teil (20) des Kerns eine Bewegung in dem genannten Freiraum in einer querverlaufenden Richtung zu der genannten Abzugsrichtung erlaubt;
- Mittel zum Abziehen der genannten Anzahl von Kernen, die zwischen den Matrizen (4, 11) eingesetzt sind;
**dadurch gekennzeichnet, dass**
- die Vorrichtung zur Verwendung in einer Presse bestimmt ist, die eine feststehende Ebene und eine bewegliche Ebene hat, wobei eine erste Matrize (11) an die bewegliche Ebene und eine zweite Matrize an die feststehende Ebene der Presse angeschlossen ist;
- die Vorrichtung Mittel (35, 44) zum lösbaren Befestigen der genannten Teile (19, 20) eines jeden Kerns an der zweiten Matrize (4) enthält, und zwar nur für einen Anfangsteil des gesamten Laufs der beweglichen Ebene;
- die genannten Abzugsmittel (9, 10) eine erste Anzahl von Zapfen (10) enthalten, von denen jeder Zapfen im Verhältnis zu der Richtung, in welcher die Matrizen getrennt werden, geneigt ist, und jeder Zapfen eine Abzugsbewegung eines jeweiligen ersten Teils (19) eines Kerns während des Trennvorgangs der beiden Matrizen führt;
- die genannten Abzugsmittel (9, 10) ebenfalls eine zweite Anzahl von Zapfen (9) enthalten, von denen jeder Zapfen im Verhältnis zu der Richtung, in welcher die Matrizen getrennt werden, geneigt ist, und jeder Zapfen eine Abzugsbewegung eines jeweiligen zweiten Teils (20) eines Kerns während des Trennvorgangs der beiden Matrizen führt.

6. Vorrichtung nach Patentanspruch 5, **dadurch gekennzeichnet, dass** die genannte erste Anzahl von Zapfen (10) an der zweiten Matrize (4) befestigt ist und die genannte zweite Anzahl von Zapfen (9) an der ersten Matrize (4) befestigt ist.

7. Vorrichtung nach den Patentansprüchen 5 oder 6, **dadurch gekennzeichnet, dass** die genannten Mittel zum Befestigen der genannten Teile (19, 20) eines jeden Kerns an der zweiten Matrize (4) wie folgt enthalten:
- wenigstens einen Verbindungsbügel (35), welcher sich mit der zweiten Matrize (4) zwischen einer Eingriffsposition und einer Freigabeposition bewegt, in welchen der genannte Verbindungsbügel jeweils das Trennen der Teile (19, 20) eines jeden Kerns von der zweiten Matrize (4) verhindert und erlaubt;
- ein Profilelement (44), welches mit dem genannten Verbindungsbügel (35) zusammenwirkt, und welches an die erste Matrize (11) angeschlossen und dazu bestimmt ist, eine Bewegung des jeweiligen Verbindungsbügels (35) aus der Eingriffsposition in die Freigabeposition zu steuern.

8. Vorrichtung nach den Patentansprüchen von 5 bis 7, **dadurch gekennzeichnet, dass** die genannten Kerne an einer Platte (14) montiert sind, letztere befestigt an einen Abzugstisch (12) mit Hilfe von Säulen (13), wobei der Tisch (12) an Verschiebemittel bekannter Art angeschlossen ist, welche auf der beweglichen Ebene der Presse angeordnet sind; wobei der Abzugstisch (12) an die genannten Verschiebemittel mit einem Spiel (34) in der Richtung (x) des Hubes der beweglichen Ebene der Presse angeschlossen ist; und wobei das genannte Spiel (34) einen Wert hat, der nicht geringer ist als der Teil des gesamten Laufs der beweglichen Ebene, in welchem die genannten Befestigungsmittel (35, 44) aktiv sind.

## Revendications

1. Un procédé de fabrication de roues à aubes fermées, comprenant les phases suivantes:
- préparation d'une empreinte de moulage (21) définie par au moins une pluralité de noyaux insérés entre deux matrices (4, 11) opposées et coaxiales par rapport à un axe (x), chaque noyau étant composé d'une première partie (19) et d'une seconde partie (20), une première matrice (11) interagissant avec les deux parties (19, 20) des noyaux et une seconde matrice (4) interagissant avec la première partie (19) des noyaux de manière à définir l'empreinte de moulage (21);
- remplissage de l'empreinte de moulage (21) par injection d'un matériau fondu et successive solidification du matériau, de manière à réaliser la roue à aubes (40);
- déplacement de la première matrice (11) le long dudit axe (x) de manière à la séparer de la roue à aubes (40);
- pendant ce mouvement, maintient de la relation de la roue à aubes et des noyaux avec la seconde matrice (4) au moins jusqu'à ce que la première matrice (11) soit complètement désengagée par rapport à la première partie (19) de chaque noyau;
- après ledit désengagement complet, libération de la relation de la roue à aubes (40) et des noyaux avec la seconde matrice (4);
- déplacement de la roue à aubes (40) le long dudit axe (x) de manière à séparer la roue à aubes (40) de la seconde matrice (4);
- pendant la séparation de la roue à aubes (40), extraction, transversalement à l'axe (x), de la première partie (19) de chaque noyau, cette dernière étant en contact avec une surface interne (41) de la roue à aubes (40), en libérant un espace entre la surface interne (41) de la roue à aubes (40) et la seconde partie (20) de chaque noyau, l'extraction étant réalisée au moyen d'une interaction entre des surfaces inclinées et des tiroirs glissants (2), dans laquelle chaque surface inclinée est inclinée par rapport à la direction dans laquelle la roue à aubes (40) se déplace et chaque tiroir (2) supporte une première partie (19) correspondante de chaque noyau;
- extraction de la seconde partie (20) de chaque noyau transversalement à l'axe (x) et déplacement simultané de la seconde partie (20) de chaque noyau vers ladite surface interne (41) de la roue à aubes.

2. Un procédé selon la revendication 1, **caractérisé en ce que** l'extraction de la première et de la seconde partie de chaque noyau, respectivement (19, 20), est réalisée en déplaçant les noyaux dans une direction rectiligne transversale par rapport à la roue à aubes (40), et en ce que la roue à aubes (40) est libre de se mouvoir au moins pendant l'extraction de la seconde partie (20) du noyau.

3. Un procédé selon les revendications 1 ou 2, **caractérisé en ce qu'**après l'extraction la première partie (19) de chaque noyau est reliée de manière amovible à la seconde partie (20) du noyau.

4. Un procédé selon n'importe laquelle des revendications précédentes, **caractérisé en ce que**, après l'extraction de la première partie (19) de chaque noyau, la roue à aubes (40) et la première matrice (11) sont séparées l'une de l'autre en deux étapes: une première étape, au moins jusqu'au désengagement complet de ladite première matrice (11) par rapport à la seconde partie (20) de chaque noyau, dans laquelle la roue à aubes (40) et la seconde partie (20) de chaque noyau n'entrent pas en mouvement l'un relativement à l'autre; et une seconde étape, dans laquelle la roue à aubes (40) et la seconde partie (20) de chaque noyau réalisent un mouvement relatif d'extraction qui dépend du mouvement de séparation de la première matrice (11) le long de l'axe (x) et qui est tranversal audit mouvement de séparation.

5. Un dispositif de fabrication de roues à aubes fermées selon le procédé des revendications précédentes, comprenant:
- deux matrices (4, 11) coaxialement opposées par rapport à un axe (x) et qui peuvent être axialement rapprochées ou éloignées;
- une pluralité de noyaux pouvant être insérés entre lesdites deux matrices (4, 11) de manière à définir une empreinte de moulage (21) d'une roue à aubes fermée, chaque noyau étant composé d'une première partie (19) et d'une seconde partie (20) pouvant être séparées l'une de l'autre, la première partie (19) de chaque noyau étant conformée et disposée de manière à être extraite dans une direction d'extraction de l'empreinte de moulage (21) et de manière à libérer, une fois qu'elle est extraite, un espace permettant à la respective seconde partie (20) du noyau d'effectuer un mouvement dans ledit espace dans une direction transversale à ladite direction d'extraction;
- des moyens pour extraire ladite pluralité de noyaux insérés entre les matrices (4, 11);
**caractérisé en ce que**:
- le dispositif est destiné à être utilisé dans une presse ayant un plan fixe et un plan mobile, une première matrice (11) étant reliée au plan mobile et une seconde matrice (4) étant reliée au plan fixe de la presse;
- le dispositif comprend des moyens (35, 44) pour relier de manière amovible lesdites parties (19, 20) de chaque noyau à la seconde matrice (4) seulement pour une partie initiale de la course totale du plan mobile;
- lesdits moyens d'extraction (9, 10) comprennent une première pluralité de broches (10), chacune desquelles broches étant inclinée par rapport à la direction dans laquelle les matrices sont séparées et guidant le mouvement d'extraction d'une respective première partie (19) d'un noyau pendant la séparation des deux matrices;
- lesdits moyens d'extraction (9, 10) comprennent également une seconde pluralité de broches (9), chacune desquelles broches étant inclinée par rapport à la direction dans laquelle les matrices sont séparées et guidant le mouvement d'extraction d'une respective seconde partie (19) d'un noyau pendant la séparation des deux matrices.

6. Un dispositif selon la revendication 5, **caractérisé en ce que** ladite première pluralité de broches (10) est fixée à la seconde matrice (4) et ladite seconde pluralité de broches (9) est fixée à la première matrice (11).

7. Un dispositif selon les revendications 5 ou 6, **caractérisé en ce que** lesdits moyens pour relier lesdites parties (19, 20) de chaque noyau à la seconde matrice (4) comprennent:
- au moins un tasseau d'accouplement (35) qui se déplace avec la seconde matrice (4) entre une position engagée et une position désengagée dans laquelle ledit tasseau d'accouplement, respectivement, prévient et permet la séparation entre les parties (19, 20) de chaque noyau et la seconde matrice (4);
- un élément profilé (44) qui interagit avec ledit tasseau d'accouplement (35) et qui est associé à ladite première matrice (11) et est destiné au contrôle du mouvement du respectif tasseau d'accouplement (35) de la position engagée à la position désengagée.

8. Un dispositif selon les revendications 5 à 7, **caractérisé en ce que** lesdits noyaux sont montés sur une plaque (14) reliée à une table d'extraction (12) au moyen d'une colonne (13), la table (12) étant reliée avec des moyens de type connu pour translater, qui sont positionnés sur le plan mobile de la presse; la table d'extraction (12) étant reliée auxdits moyens pour translater avec un jeu (34) dans la direction (x) de la course du plan mobile de la presse; ledit jeu (34) étant d'une valeur non inférieure à la partie de la course totale du plan mobile dans laquelle lesdits moyens de liaison (35, 44) sont actifs.
